# FASCICULE DE BREVET EUROPEEN

(11) **EP 2 071 130 B1**
(45) Date de publication et mention de la délivrance du brevet: **21.07.2010**
(21) Numéro de dépôt: 08167793.2
(22) Date de dépôt: 29.10.2008
(51) Int. Cl.: F01D 9/06, F01D 5/08, F04D 27/02, F04D 29/64

(54) **Montage des tubes de pressurisation d'une enceinte interne dans une turbomachine**
Montage von Druckleitungen in eine Innenkammer eines Turbotriebwerks
Installation of tubes for pressurising an internal enclosure in a turbomachine

(30) Priorité: 14.12.2007 FR 0708711
(43) Date de publication de la demande: 17.06.2009
(73) Titulaire: Snecma, 75015 Paris (FR)
(72) Inventeur: Largillier, Christian, 89340 Villeneuve La Guyard (FR); Marlin, François, Marie, Paul, 77760 Villiers sous Grez (FR); Servant, Régis, Eugène, Henri, 91270 Vigneux sur Seine (FR)
(74) Mandataire: Ramey, Daniel

(56) Documents cités:
- EP-A- 1 750 012
- GB-A- 783 970
- US-A1- 2004 179 936
- US-A1- 2007 053 770

## Description

La présente invention concerne le montage des tubes de pressurisation d'une enceinte interne dans une turbomachine, telle qu'un turbopropulseur ou un turboréacteur d'avion.

Une turbomachine comprend un compresseur basse pression et un compresseur haute pression entraînés chacun par un arbre de rotation et reliés par un carter intermédiaire délimitant une veine d'écoulement annulaire d'un flux d'air primaire circulant du compresseur basse pression vers le compresseur haute pression. Un flasque annulaire d'étanchéité est porté par le carter intermédiaire et s'étend entre des paliers de guidage des arbres des compresseurs. Une extrémité radialement interne du flasque comprend des joints à labyrinthe coopérant avec les extrémités aval et amont, respectivement, des arbres des compresseurs basse et haute pression. Cette extrémité du flasque comprend également des cheminées radiales de montage de tubes de pressurisation de l'enceinte interne, ces tubes s'étendant dans des conduits radiaux du carter intermédiaire débouchant dans la veine d'air primaire pour être alimentés en air sous pression. Cet air sous pression empêche les fuites par les joints à labyrinthe de l'huile de lubrification des paliers de guidage des arbres des compresseurs. Dispositifs similaires sont aussi divulgués par les documents GB 783970A, EP-A-1750012 et US 2004/179936A1.

Pour leur montage, les tubes de pressurisation sont engagés dans les cheminées radiales du flasque annulaire puis le flasque est fixé sur le carter intermédiaire. Les extrémités radialement externes des tubes sont ensuite engagées en position de service dans les conduits radiaux du carter intermédiaire. Une collerette annulaire intégrée aux tubes permet le maintien des tubes dans cette position, grâce à l'utilisation d'une bride annulaire montée autour de chaque tube, et fixée par boulonnage sur une bride correspondante des conduits radiaux du carter intermédiaire.

Au cours de ce montage, les joints annulaires d'étanchéité qui sont logés dans des gorges aux extrémités des tubes, doivent être engagés et sortis plusieurs fois des cheminées radiales du flasque annulaire, ce qui risque de les endommager.

Par ailleurs, ce montage n'est possible que sur les turbomachines de grand diamètre, dans lesquelles on peut déplacer les tubes radialement vers l'intérieur dans les cheminées radiales du flasque sur une distance suffisante pour que les extrémités externes des tubes soient bien dégagées des conduits radiaux du carter intermédiaire et n'interfèrent pas avec ces derniers lors de la fixation du flasque sur le carter intermédiaire.

Dans les turbomachines de petit diamètre, la distance axiale entre les arbres de compresseurs est réduite et l'espace qui se trouve radialement à l'intérieur des cheminées radiales du flasque est en général occupé partiellement par des écrous de palier portant des joints à labyrinthe, ce qui ne permet pas le déplacement radial vers l'intérieur des tubes de pressurisation, nécessaire à leur montage.

La présente invention a pour objet de résoudre ce problème de montage d'une façon simple, efficace et économique.

Elle propose, à cet effet, un module de compresseur d'une turbomachine, comprenant un compresseur basse pression et un compresseur haute pression dont les arbres sont guidés dans des paliers séparés d'une enceinte interne par des joints à labyrinthe montés sur un flasque d'étanchéité porté par un carter intermédiaire, et des tubes radiaux de pressurisation de l'enceinte interne, reliant cette enceinte à une veine d'air comprimé passant dans le carter intermédiaire, les extrémités de ces tubes étant engagées à étanchéité dans des conduits radiaux du carter intermédiaire et dans des cheminées radiales du flasque d'étanchéité, des moyens étant prévus pour immobiliser les extrémités des tubes dans les conduits radiaux du carter intermédiaire, les cheminées du flasque d'étanchéité ayant une longueur ou dimension radiale suffisante pour que les extrémités radialement internes des tubes y soient déplaçables en translation entre une position de service où les extrémités radialement externes des tubes sont montées à étanchéité dans les conduits du carter intermédiaire et une position de montage où les extrémités radialement externes des tubes sont sorties des conduits du carter intermédiaire.

Ainsi, en position de montage, les extrémités radialement internes des tubes restent à l'intérieur des cheminées, ce qui autorise le montage des tubes de pressurisation dans des turbomachines de petit diamètre.

En outre, ce montage évite que les joints d'étanchéité montés aux extrémités radialement internes des tubes soient rentrés et sortis plusieurs fois des cheminées radiales.

Selon une autre caractéristique de l'invention, les cheminées radiales du flasque d'étanchéité comprennent des moyens limitant le déplacement en translation des extrémités des tubes en direction de l'axe de la turbomachine. On interdit ainsi aux joints d'étanchéité des extrémités internes des tubes de sortir des cheminées radiales et on définit de façon positive une position de montage des tubes.

Avantageusement, les cheminées radiales du flasque comprennent à leur extrémité radialement interne un rétrécissement interdisant le passage des extrémités des tubes et définissant la position de montage des tubes.

Les extrémités radialement externes des cheminées du flasque d'étanchéité comportent un chanfrein, ce qui facilite l'insertion des extrémités radialement internes des tubes et de leurs joints d'étanchéité dans les cheminées du flasque.

L'invention concerne encore un flasque d'étanchéité d'enceinte interne pour un module de compresseur du type décrit ci-dessus, comprenant des cheminées radiales de montage des tubes de pressurisation de l'enceinte interne, comme divulgué par le document US 2007/05377 A1, les extrémités radialement internes des cheminées comprenant un rétrécissement.

D'autres avantages et caractéristiques de l'invention apparaîtront à la lecture de la description suivante faite à titre d'exemple non limitatif et en référence aux dessins annexés dans lesquels :
- la figure 1 est une demi-vue schématique partielle en coupe axiale d'une turbomachine selon la technique antérieure, montrant un tube de pressurisation de l'enceinte interne, en position de service ;
- la figure 2 est une vue schématique correspondant à la figure 1 et montrant le tube de pressurisation en position de montage ;
- la figure 3 est une demi-vue schématique partielle en coupe axiale d'une turbomachine selon l'invention, montrant un tube de pressurisation de l'enceinte interne en position de service ;
- la figure 4 est une vue schématique correspondant à la figure 3 et montrant le tube de pressurisation en position de montage ;
- la figure 5 est une vue schématique partielle en perspective d'un flasque annulaire selon l'invention.

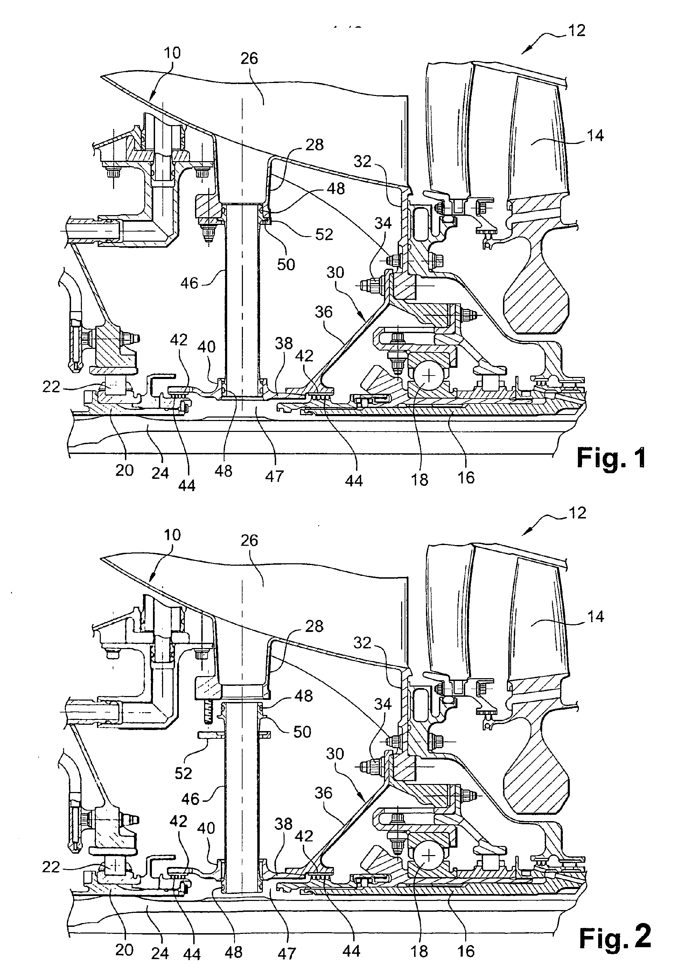

On se réfère tout d'abord aux figures 1 et 2 qui représentent une turbomachine selon la technique antérieure et dans laquelle un carter intermédiaire 10 est agencé entre un compresseur basse-pression en amont (non représenté) et un compresseur haute-pression 12 en aval. Le rotor 14 du compresseur haute-pression est entraîné en rotation par un arbre 16 qui est porté et guidé à son extrémité amont par un palier à roulement 18 et qui est entraîné par l'arbre d'une turbine haute-pression agencée en aval (non représentée). De manière similaire, le rotor du compresseur basse-pression est entraîné en rotation par un arbre 20 qui est porté et guidé par un palier à roulement 22 et qui est entraîné par un arbre 24 d'une turbine basse-pression agencée en aval de la turbine haute-pression.

Le carter intermédiaire 10 délimite une veine 26 d'écoulement d'un flux d'air primaire circulant depuis le compresseur basse-pression vers le compresseur haute-pression 12 et comprend des bossages cylindriques tubulaires 28 s'étendant radialement vers l'intérieur. Un flasque annulaire 30 est fixé à son extrémité aval sur une bride 32 du carter intermédiaire 10 grâce à un système de fixation vis/écrou 34 et coopère à son extrémité amont avec les extrémités aval et amont, respectivement, des arbres des compresseurs basse et haute-pression 20, 16. Le flasque 30 comprend une paroi tronconique 36, dont le diamètre en section se réduit vers l'amont, raccordée à son extrémité amont à une paroi 38 sensiblement cylindrique comprenant des cheminées radiales 40 s'étendant vers l'extérieur. La paroi cylindrique 38 comprend à ses extrémités amont et aval, des éléments abradables 42 destinés à coopérer avec des joints à labyrinthe 44 portés par les extrémités amont et aval, respectivement, des arbres de compresseur haute et basse pression 16, 20.

Des tubes de pressurisation 46 sont montés dans les cheminées 40 et dans les conduits formés par les bossages radiaux 28 du carter intermédiaire 10, les extrémités des tubes 46 comprenant des gorges annulaires recevant des joints annulaires d'étanchéité 48.

En fonctionnement, de l'air circulant dans la veine primaire 26 est prélevé par les tubes 46 pour pressuriser l'enceinte interne 47 située entre les arbres des compresseurs et l'arbre 24 de turbine basse-pression, ce qui évite des fuites de l'huile de lubrification des paliers 18, 22 vers cette enceinte par les joints à labyrinthe 44.

Les tubes de pressurisation, comme représenté en figure 2, sont introduits depuis l'extérieur dans les cheminées 40 du flasque 30 jusqu'à ce que leurs extrémités radialement internes soient au niveau des extrémités des arbres de compresseurs 16, 20. De cette manière, les extrémités radialement externes des tubes 46 restent à l'extérieur des conduits 28 du carter intermédiaire 10. Les tubes 46 sont ensuite déplacés radialement vers l'extérieur pour que leurs extrémités radialement externes s'engagent dans les conduits radiaux 28. Chaque tube 46 est maintenu en position de service grâce à une collerette annulaire 50 de son extrémité extérieure qui est appliquée sur un rebord du conduit 28 par une bride 52 fixée sur le carter intermédiaire 10 par des vis ou des boulons.

Ce montage n'est cependant réalisable que dans le cas de gros moteurs où l'espacement axial entre les extrémités des arbres des compresseurs haute et basse-pression 16, 20 est suffisant pour le déplacement des tubes 46 en position de montage. De plus, les joints annulaires d'étanchéité 48 des extrémités radialement internes des tubes 46 doivent être insérés deux fois dans les cheminées 40, une première fois lors du montage des tubes 46 sur le flasque 30, puis une seconde fois lors de l'engagement des tubes 46 dans les conduits 28 du carter intermédiaire 10, ce qui augmente le risque de les endommager.

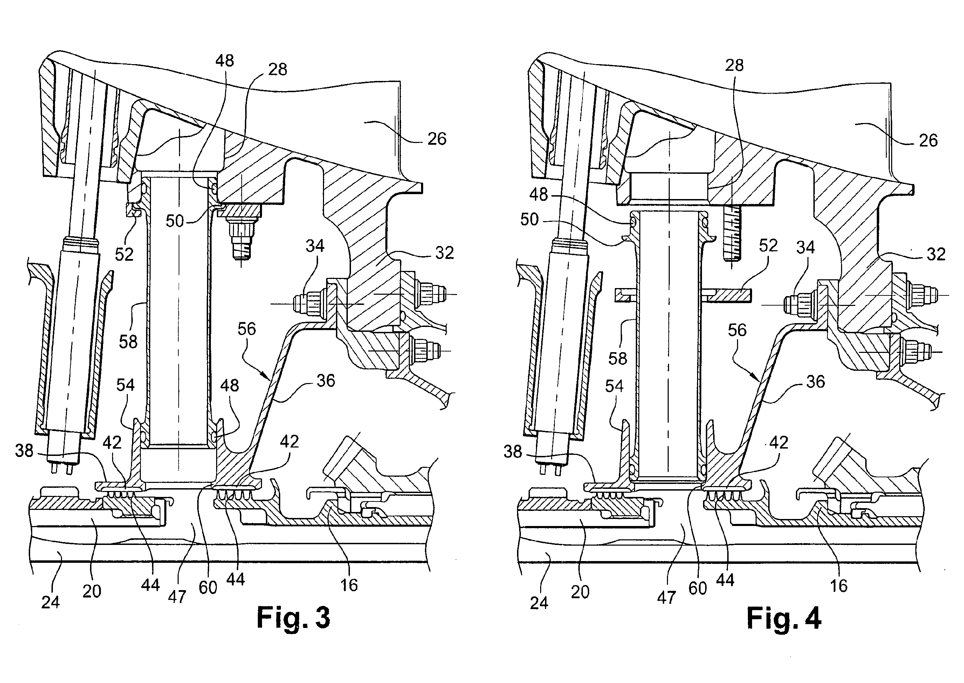

Selon l'invention, ces inconvénients sont évités grâce au fait que, comme représenté aux figures 3 et 4, les cheminées 54 du flasque d'étanchéité 56 ont une longueur ou dimension radiale suffisante pour que les extrémités radialement internes des tubes 58 de pressurisation puissent y être déplacées en translation entre leur position de service et leur position de montage, ce qui permet de n'insérer qu'une seule fois les joints annulaires 48 des extrémités radialement internes des tubes 58 dans les cheminées 54 du flasque 56.

En pratique, la dimension radiale des cheminées 54 du flasque 56 est augmentée et la longueur des tubes 58 est diminuée, par rapport à la technique antérieure.

Les cheminées radiales 54 du flasque 56 comprennent des moyens limitant le déplacement en translation des tubes 58 vers les arbres de compresseur. Ces moyens comprennent un rétrécissement du diamètre interne des cheminées, formé par un rebord annulaire 60 disposé à l'extrémité radialement interne des cheminées 54. Ce rebord 60 sert ainsi de butée en translation aux tubes 58 et pourrait être situé radialement plus vers l'extérieur dans la cheminée. Dans ce cas, il serait nécessaire d'augmenter la longueur ou dimension radiale des cheminées 54 et de diminuer la longueur des tubes 58, afin que le montage des tubes soit toujours possible.

Les extrémités radialement externes des cheminées 54 du flasque 56 comportent un chanfrein afin de faciliter l'insertion des tubes 58 dans les cheminées 54 et d'éviter d'endommager les joints d'étanchéité 48.

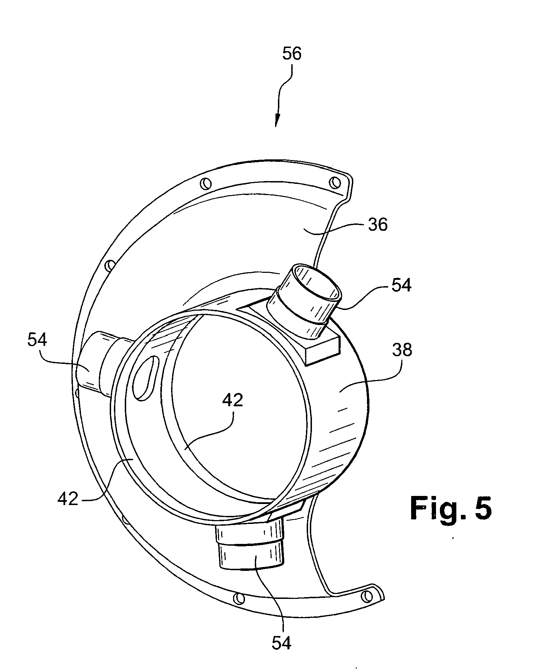

La figure 5 représente un flasque 56 selon l'invention, lequel comprend trois cheminées. Le flasque 56 peut comprendre un nombre plus important de cheminées selon les besoins spécifiques en pressurisation et l'espace disponible.

Si l'invention est particulièrement applicable aux turbomachines de faible diamètre, elle est également applicable aux turbomachines de plus grand diamètre.

## Revendications

1. Module de compresseur de turbomachine comprenant un compresseur basse pression et un compresseur haute pression (12) dont les arbres (16, 20) sont guidés dans des paliers (18, 22) isolés d'une enceinte interne (47) contenant les arbres de compresseurs (16, 20) par des joints à labyrinthe (44) montés sur un flasque d'étanchéité (56) porté par un carter intermédiaire (10), et des tubes radiaux (58) de pressurisation de l'enceinte interne (47), reliant cette enceinte à une veine d'air comprimé passant dans le carter intermédiaire (10), les extrémités de ces tubes (58) étant engagées à étanchéité dans des conduits radiaux (28) du carter intermédiaire (10) et dans des cheminées radiales (54) du flasque d'étanchéité (56), des moyens étant prévus pour immobiliser les extrémités des tubes (58) dans les conduits radiaux (28) du carter intermédiaire (10), **caractérisé en ce que** les cheminées (54) du flasque d'étanchéité (56) ont une longueur ou dimension radiale suffisante pour que les extrémités radialement internes des tubes (58) y soient déplaçables en translation entre une position de service où les extrémités radialement externes des tubes (58) sont montées à étanchéité dans les conduits (28) du carter intermédiaire (10) et une position de montage où les extrémités radialement externes des tubes (58) sont sorties des conduits (28) du carter intermédiaire (10).

2. Module de compresseur selon la revendication 1, **caractérisé en ce que** les cheminées radiales (54) du flasque d'étanchéité comprennent des moyens limitant le déplacement en translation des extrémités des tubes (58) en direction de l'axe de la turbomachine.

3. Module de compresseur selon la revendication 2, **caractérisé en ce que** les cheminées radiales (54) du flasque comprennent à leur extrémité radialement interne un rétrécissement interdisant le passage des extrémités des tubes (58).

4. Module de compresseur selon la revendication 3, **caractérisé en ce que** le rétrécissement des cheminées radiales (54) du flasque d'étanchéité définit la position de montage des tubes.

5. Module de compresseur selon l'une des revendications 1 à 4, **caractérisé en ce que** les extrémités des tubes (58) portent des joints annulaires d'étanchéité déplaçables par glissement dans les conduits radiaux (28) du carter intermédiaire et dans les cheminées radiales (54) du flasque d'étanchéité.

6. Module de compresseur selon la revendication 5, **caractérisé en ce que** les extrémités radialement externes des cheminées (54) du flasque d'étanchéité comportent un chanfrein.

7. Module de compresseur selon l'une des revendications 1 à 6, **caractérisé en ce que** les extrémités radialement externes des tubes (58) comprennent des collerettes annulaires destinées à s'appliquer sur les extrémités des conduits radiaux (28) du carter intermédiaire (10) dans la position de service des tubes et bloquées dans cette position au moyen de brides annulaires fixées sur le carter intermédiaire autour des tubes.

8. Flasque d'étanchéité d'enceinte interne pour module de compresseur de turbomachine selon l'une des revendications 1 à 7, comprenant des cheminées radiales (54) de montage de tubes de pressurisation de l'enceinte interne, **caractérisé en ce que** les extrémités radialement internes des cheminées (54) comprennent un rétrécissement.

9. Turbomachine, telle qu'un turboréacteur ou un turbopropulseur d'avion, **caractérisée en ce qu'**elle comprend un module de compresseur selon l'une des revendications 1 à 7.

## Claims

1. A turbomachine compressor module comprising a low-pressure compressor and a high-pressure compressor having shafts that are guided in bearings that are isolated from an internal enclosure containing the compressor shafts by labyrinth seals mounted on a sealing end plate carried by an intermediate casing, and radial tubes for pressurizing the internal enclosure, connecting said enclosure to a compressed air passage passing through the intermediate casing, the ends of these tubes being engaged in sealed manner in radial ducts of the intermediate casing and in radial chimneys of the sealing end plate, means being provided to hold the ends of the tubes stationary in the radial ducts of the intermediate casing, the module being **characterized in that** the chimneys of the sealing end plate are of radial size or length that is sufficient to enable the radially inner ends of the tubes to be moved therein in translation between a service position in which the radially outer ends of the tubes are mounted in sealed manner in the ducts of the intermediate casing, and a mounting position in which the radially outer ends of the tubes are not in the ducts of the intermediate casing.

2. A compressor module according to claim 1, **characterized in that** the radial chimneys of the sealing end plate include means that limit the movement in translation of the ends of the tubes towards the axis of the turbomachine.

3. A compressor module according to claim 2, **characterized in that** each radial chimney of the end plate includes at its radially inner end a narrowing that prevents the end of a tube from passing through.

4. A compressor module according to claim 3, **characterized in that** the narrowings in the radial chimneys of the sealing end plate define the mounting positions of the tubes.

5. A compressor module according to one of the claims 1 to 4, **characterized in that** the ends of the tubes carry sealing rings that are movable in sliding within the radial ducts of the intermediate casing and within the radial chimneys of the sealing end plate.

6. A compressor module according to claim 5, **characterized in that** the radially outer ends of the chimneys of the sealing end plate include respective chamfers.

7. A compressor module according to one of the claims 1 to 6, **characterized in that** the radially outer ends of the tubes include respective annular collars for bearing against the ends of the radial ducts of the intermediate casing in the service position of the tubes and held in this position by means of annular flanges fastened to the intermediate casing around the tubes.

8. An end plate for sealing an internal enclosure of a turbomachine compressor module according to one of the claims 1 to 7, the end plate including radial chimneys for mounting tubes for pressurizing the internal enclosure, and being **characterized in that** the radially inner ends of the chimneys include respective narrowings.

9. A turbomachine, such as an airplane turboprop or turbojet, **characterized in that** it includes a compressor module according to one of the claims 1 to 7.

## Patentansprüche

1. Turbomaschinenverdichtermodul mit einem Niederdruckverdichter und einem Hochdruckverdichter (12), deren Wellen (16, 20) in Lager (18, 22) geführt sind, die durch eine Innenkammer (47), welche die Verdichterwellen (16, 20) enthält, isoliert sind über Labyrinthdichtungen (44), die an einem von einem Zwischengehäuse (10) getragenem Dichtungsflansch (56) angebracht sind, und radialen Rohren (58) zur Druckbeaufschlagung der Innenkammer (47), welche diese Kammer mit einem in dem Zwischengehäuse (10) fliessenden Druckluftstrom verbinden, wobei die Enden dieser Rohre (58) dicht in radialen Leitungen (28) des Zwischengehäuses (10) sowie in radialen Stutzen (54) des Dichtungsflansches (56) in Eingriff sind, wobei Mittel zum Fixieren der Enden der Rohre (58) in den radialen Leitungen (28) des Zwischengehäuses (10) vorgesehen sind, **dadurch gekennzeichnet, dass** die Stutzen (54) des Diehtungsflansches (56) eine ausreichende Länge oder radiale Abmessung haben, damit die radial innenliegenden Enden der Rohre (58) dort in Translation zwischen einer Betriebsposition, wo die radial außenliegerden Enden der Rohre (58) dicht in den Leitungen (28) des Zwischengehäuses (10) angebracht sind, und einer Montageposition verschiebbar sind, wo die radial außenliegenden Enden der Rohre (58) aus den Leitungen (28) des Zwischengehäuses (10) herausgeführt sind.

2. Verdichtermodul nach Anspruch 1, **dadurch gekennzeichnet, dass** die radialen Stutzen (54) des Dichtungsflansches Mittel aufweisen, welche die Translationsverschiebung der Enden der Rohre (58) in Richtung der Achse der Turbomaschine begrenzen.

3. Verdichtermodul nach Anspruch 2, **dadurch gekennzeichnet, dass** die radialen Stutzen (54) des Flansches an ihrem radial innenliegenden Ende eine Verengung aufweisen, welche den Durchgang der Enden der Rohre (58) verhindert.

4. Verdichtermodul nach Anspruch 3, **dadurch gekennzeichnet, dass** die Verengung der radialen Stutzen (54) des Dichtungsflansches die Montageposition der Rohre definiert.

5. Verdichtermodul nach einem der Ansprüche 1 bis 4, **dadurch gekennzeichnet, dass** die Enden der Rohre (58) ringförmige Dichtungen tragen, die durch Gleiten in den radialen Leitungen (28) des Zwischengehäuses und in den radialen Stutzen (54) des Dichtungsflansches verschiebbar sind.

6. Verdichtermodul nach Anspruch 5, **dadurch gekennzeichnet, dass** die radial außenliegenden Enden der Stutzen (54) des Dichtungsflansches eine Abschrägung aufweisen.

7. Verdichtermodul nach einem der Ansprüche 1 bis 6, **dadurch gekennzeichnet, dass** die radial außenliegenden Enden der Rohre (58) ringförmige Kragen aufweisen, die dazu bestimmt sind, an den Enden der radialen Leitungen (28) des Zwischengehäuses (10) in der Betriebsposition der Rohre anzuliegen, und in dieser Position mittels ringförmiger Flansche blockiert sind, die an dem Zwischengehäuse um die Rohre befestigt sind.

8. Dichtungsflansch einer Innenkammer für ein Turbomaschinenverdichtermodul nach einem der Ansprüche 1 bis 7 mit radialen Stutzen (54) zur Montage von Rohren zur Druckbeaufschlagung der Innenkammer, **dadurch gekennzeichnet, dass** die radial innenliegenden Enden der Stutzen (54) eine Verengung aufweisen.

9. Turbomaschine wie ein Flugzengstrahltriebwerk oder Flugzeugturboproptriebwerk, **dadurch gekennzeichnet, dass** sie ein Verdichtermodul nach einem der Ansprüche 1 bis 7 aufweist.
